(19) Europäisches Patentamt
European Patent Office
Office européen des brevets

(11) **EP 1 499 996 B1**

(12) **EUROPEAN PATENT SPECIFICATION**

(45) Date of publication and mention
of the grant of the patent:
**16.06.2010  Bulletin 2010/24**

(51) Int Cl.:
***H04L 25/03*** *(2006.01)*

(21) Application number: **03747365.9**

(22) Date of filing: **29.04.2003**

(86) International application number:
**PCT/AU2003/000502**

(87) International publication number:
**WO 2003/094037 (13.11.2003 Gazette 2003/46)**

(54) **FILTER STRUCTURE FOR ITERATIVE SIGNAL PROCESSING**

FILTERSTRUKTUR FÜR ITERATIVE SIGNALVERARBEITUNG

STRUCTURE DE FILTRE POUR TRAITEMENT DE SIGNAL ITERATIF

(84) Designated Contracting States:
**AT BE BG CH CY CZ DE DK EE ES FI FR GB GR HU IE IT LI LU MC NL PT RO SE SI SK TR**

(30) Priority: **02.05.2002  AU PS205302**

(43) Date of publication of application:
**26.01.2005  Bulletin 2005/04**

(73) Proprietor: **UNIVERSITY OF SOUTH AUSTRALIA Adelaide, S.A. 5000 (AU)**

(72) Inventors:
• **ALEXANDER, Paul Dean,**
**C/- Uni. South Australia**
**Mawson Lakes, S.A. 5095 (AU)**
• **GRANT, Alexander James,**
**C/- Uni. South Australia**
**Mawson Lakes, S.A. 5095 (AU)**
• **RASMUSSEN, Lars Kildehoj,**
**C/- Uni. South Australia**
**Mawson Lakes, S.A. 5095 (AU)**

(74) Representative: **Read, Matthew Charles et al**
**Venner Shipley LLP**
**20 Little Britain**
**London**
**EC1A 7DH (GB)**

(56) References cited:
**US-A- 5 966 262**

• **LUNA RIVERA J M ET AL: "ITERATIVE MULTIUSER RECEIVER FOR A CODED DS-CDMA SYSTEM" IEEE VEHICULAR TECHNOLGY CONFERENCE, vol. 2 OF 4, no. 53, 6 May 2001 (2001-05-06), - 9 May 2001 (2001-05-09) pages 1518-1522, XP001067218 IEEE, NEW YORK, NY , US ISBN: 0-7803-6728-6**
• **TENG JOON LIM ET AL: "The Kalman Filter as the Optimal Linear Minimum Mean-Squared Error Multiuser CDMA Detector" IEEE TRANSACTIONS ON INFORMATION THEORY, vol. 46, no. 7, November 2000 (2000-11), XP011027788 IEEE SERVICE CENTER, PISCATAWAY, NJ, US ISSN: 0018-9448**
• **PO-AN SUNG ET AL: "A Linear Minimum Mean Square Error Multiuser Receiver in Rayleigh-Fading Channels" IEEE JOURNAL ON SELECTED AREAS IN COMMUNICATIONS, vol. 14, no. 8, October 1996 (1996-10), XP011054560 IEEE SERVICE CENTER, PISCATAWAY, US ISSN: 0733-8716**
• **RASMUSSEN ET AL.: 'Recursive filters for iterative multiuser decoding' PROCEEDINGS OF ISIT 2002, [Online] 30 June 2002 - 05 July 2002, (LAUSANNE, SWITZERLAND), page 445, XP010602156 Retrieved from the Internet: <URL: http://www.itr.unisa.edu.au/~palex/pub lications.htm> [retrieved on 2003-05-30]**

- ALEXANDER ET AL.: 'Iterative detection in code-division multiple-access with error control coding' EUROPEAN TRANSACTIONS ON TELECOMMUNICATIONS, SPECIAL ISSUE ON CDMA TECHNIQUES FOR WIRELESS COMMUNICATIONS SYSTEMS, [Online] vol. 9, no. 5, September 1998 - October 1998, pages 419 - 426, XP000782803 Retrieved from the Internet: <URL:http://www.itr.unisa.edu.au/~palex/pub lications.htm> [retrieved on 2003-05-30]

- YANG Z. ET AL: 'BAYESIAN MONTE CARLO MULTIUSER RECEIVER FOR SPACE-TIME CODED MULTICARRIER CDMA SYSTEMS' IEEE JOURNAL ON SELECTED AREAS IN COMMUNICATIONS vol. 19, August 2001, IEEE SERVICE CENTER, PISCATAWAY, US, XP001110573

**Description**

TECHNICAL FIELD

This invention is related to recursive filtering for joint iterative decoding in a variety of systems and functions such as linear multiple access channel decoders, iterative equalization, iterative joint channel estimation and detection/ decoding, iterative space-time processing and iterative demodulation.

BACKGROUND

Most wireless communications systems are based on so-called multiple access techniques. This is a technology where many simultaneously active users share the same system resources in an organized manner. In most cases, sharing resources in a multiple access system means that if more than one user is active, then all users interfere with each other. Traditionally, such interference has been considered to be part of the inevitable noise that corrupts transmissions.

Such interference increases with the number of active users and thus, the performance quality in terms of how many users (capacity) that can share the resources simultaneously becomes limited.

One way to improve capacity is to introduce error control coding. Applying coding allows performance to be improved by only allowing a few of all possible combinations of code symbols to be transmitted.

Another way is to exploit the information contained in the interference. This is known as joint multiuser detection.

In systems where both these techniques are used, a decoding strategy can be applied which is termed iterative decoding. Here, a multiuser detector first provides an estimate of the transmitted symbols in terms of reliability information.

This information is forwarded to decoders that also provide reliability information based on the input from the detector. Information is then exchanged in an iterative fashion until there are no further improvements. This decoding strategy can increase capacity significantly, getting very close to theoretical capacity limits at a complexity level within reach of practical implementation.

However, an optimal multiuser detector is prohibitively complex for practical implementation, as the inherent complexity grows exponentially with the number of active users. Instead, linear multiuser detection based on linear filtering can be applied, where the corresponding complexity only grows linearly with the number of active users.

So far, linear filters for iterative joint multiuser decoding are based on the received signal and the most recent information from the decoders as input to the filter. These filters have then been designed based on various optimality criteria.

An innovation in the filter design disclosed herein is to exploit the fact that information provided by the decoders is initially only marginally correlated over iterations, i.e., in the first few iterations, each iteration provides new information. As the structure converges, the output of the decoders also converges and eventually becomes completely correlated.

The disclosed filter design is based on a technique to use all available information from all previous iterations. This implies that the filter grows linearly in size by a factor equal to the number of users. This is clearly impractical. Thus, the disclosed filter design makes it possible to use all the available information through recursive feedback of the filter output over iterations, without requiring a growing filter. The size of the filter remains the same. In order to achieve this, the filters in the structure have to be designed according to the recursive expressions derived herein.

Related structures, having lower complexity implementations, are obtained by modifying the specific filters used in the structure. The general recursive structure, however, is still fundamental for such modified filters. In these cases, the individual filters are designed according to appropriate different strategies using the principles disclosed herein.

The recursive filtering structure for iterative signal processing disclosed herein is not limited to multiuser detection, but can also be directly applied within systems and functionalities of the same structure. Examples of such applications are iterative equalization, iterative joint channel estimation and detection/decoding, iterative space-time processing, and iterative demodulation.

Po-An Sung et al, IEEE journal of selected areas in communications Vol. 14, no. 8, October 1996 describes in: "A linear minimum mean square error multiuser receiver in Rayleigh-fading Channels", an LMMSE estimator.

Zigang Yang et al, IEEE journal of selected areas in communications Vol. 19. no 8 August 2001 describes in : "Bayesian monte-carlo multiuser receiver for space-time time/coded multicarrier CDMA systems," a turbo Bayesian multiuser detector wherein the extrinsic information delivered by the channel decoder is then fed back to the blind Bayesian multiuser detector.

BRIEF DESCRIPTION OF THE INVENTION

The present invention provides an iterative signal processing arrangement as defined in the accompanying claims.

In the embodiments of the invention described hereinafter, a communication system is described having a generic linear channel model. The received signal at the input to the receiver is described by a weighted sum of the transmitted signals plus noise. The set of weighting factors represents a set of linear constraints imposed on the transmitted signals. Other constraints could possibly have been imposed on the signals. These other constraints are independent of the linear constraints imposed by the linear channel.

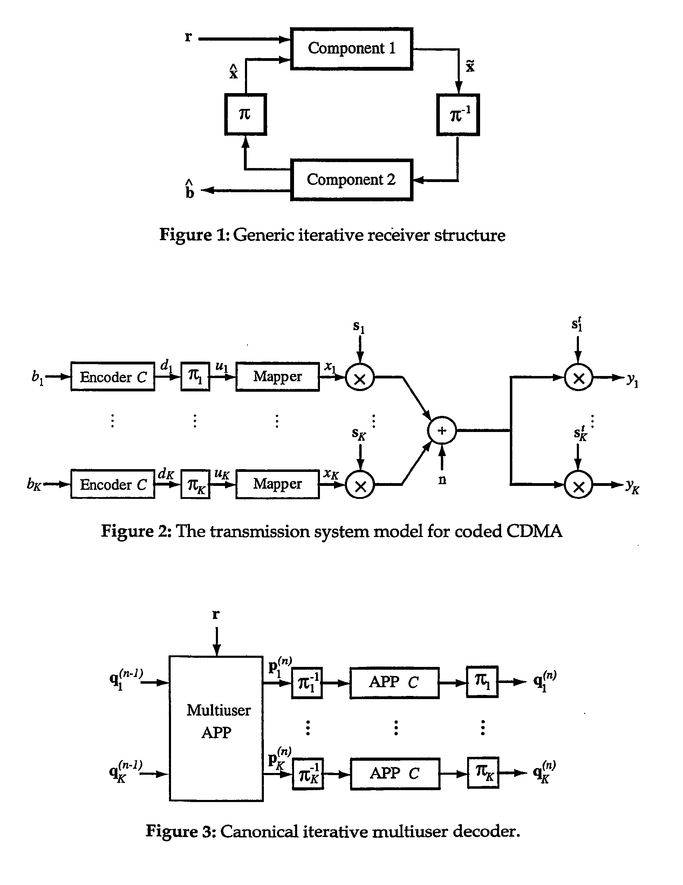

The optimal receiver structure finds the estimates of the transmitted signals, subject to all the imposed constraints. This approach is prohibitively complex for most practical cases of interest. As an alternative, a generic iterative receiver structure comprises of two separate components (see Figure 1). The first component finds the optimal estimates, only subject to the linear channel constraints, ignoring all other constraints. Only preferably these estimates are shuffled by reordering according to a pre-determined order (de-interleaved) and used as inputs to the second component which finds the optimal estimates subject only to all the other constraints, ignoring the linear channel constraints. These estimates are in turn, preferably shuffled back into the original order (interleaved), undoing the predetermined reordering, and used as inputs to the first component in the succeeding iteration cycle.

The optimal design of the first component, enforcing the linear channel constraints is often also prohibitively complex. To limit complexity, the component design itself can be constrained to be linear, leading to a linear signal processing component. The design of this linear signal processing component, given selected inputs, is the main subject of this disclosure. For the following description, the invention lies in the linear signal processing component, or signal processing component 1, corresponding to component 1 in Figure 1. The remaining part of Figure 1 is referred to as signal processing component 2.

The function of the linear signal processing component is to separate a selected transmitted signal from other "interfering" transmitted signals, based on the received signal which is a weighted sum of all transmitted signal as described above.

The input to the linear signal processing component are one or more received signals and one or more estimates of the transmitted signals, provided by signal processing component 2. The output of the linear signal processing component is an estimate of the selected transmitted signal.

The linear signal processing component comprises two linear filters. The first filter provides as output estimates of the selected transmitted signal based on inputs of one or more of the input signals to the linear signal processing component, the output of this first filter delayed by one processing time period of the iterative cycle, and the output of the second filter delayed by one processing time period of the iterative cycle.

The second filter provides as output estimates of one or more of the other transmitted signals (interfering with the selected transmitted signal) based on inputs of one or more of the input signals to the linear signal processing component, and the output of the second filter delayed by one processing time period of the iterative cycle.

The output of the first filter is the output of the linear signal processing component.

Specific embodiments of the invention will now be described in some further detail with reference to and as illustrated in the accompanying figures.

BRIEF DESCRIPTION OF THE FIGURES

Figure 1 depicts a generic iterative receiver structure;
Figure 2 depicts the transmission system model for coded CDMA;
Figure 3 depicts a canonical iterative multiuser decoder;
Figure 4 depicts an iterative multiuser decoder with linear multiuser estimation;

Figure 5 depicts the recursive filter $\Lambda_k^{(n)}$ for $n = 1$ the input signal is $\mathbf{r}$ while for $n \geq 2$ the input signal is $\hat{\mathbf{x}}_k^{(n-1)}$; and

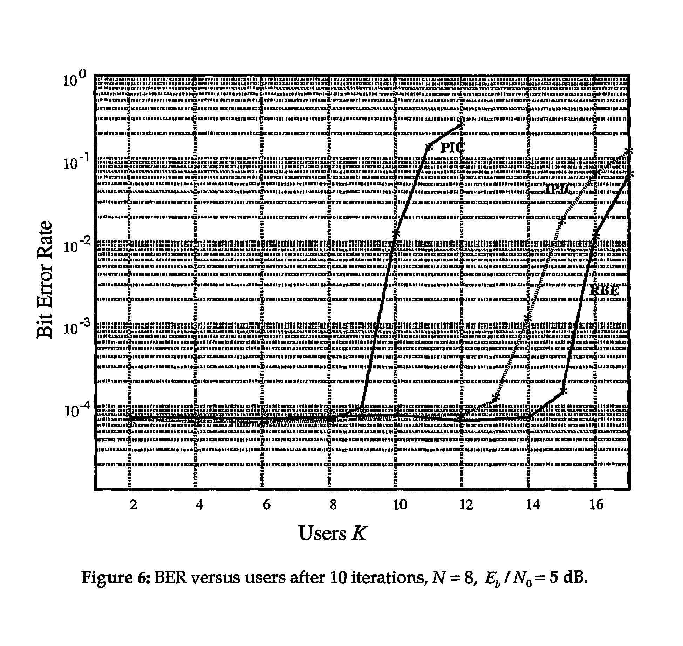

Figure 6 depicts Bit Error Rate versus users after 10 iterations, $N = 8$, $E_b / N_o = 5$ dB.

DESCRIPTION OF AN EMBODIMENT OF THE INVENTION

This invention is described using linear multiuser estimators (MUEs) suitable for use as part of an iterative multiuser decoder. A specific application of the technique in the field of turbo-decoding in a transmission system for coded CDMA is provided. However, as stated previously the structure of the filter and the principles revealed are useful in many other areas of the communications field. Thus the embodiment provided should not be considered as limiting in any way.

The specification includes theoretical considerations expressed in an appropriately precise fashion and uses mathematical analysis to prove the correctness of the approach using assumptions as required. Not all proofs of theorems used are provided herein. A disclosure such as that contained herein has direct correlation to practical devices and configurations of filter elements capable of performing the functions described. Furthermore the disclosure provided herein would be readily understood by those skilled in the art. The disclosure is such that a person skilled in the art can readily translate the theoretical configurations of elements disclosed herein into a variety of devices to solve problems or improve the performance of devices and algorithm in a variety of application areas some of which have been described previously and that will be described herein.

This invention is intended for application to any communication system described by a generic linear channel model. The received signal at the input to the receiver is described by a weighted sum of the transmitted signals plus noise. There could be multiple received observables pertaining to the same symbol interval, ie, the received signal can be a vector of received observables,

$$\mathbf{r} = \sum_{i=1}^{K} \mathbf{s}_i x_i + \mathbf{n} \qquad\qquad (1)$$

where a total of $K$ signals are transmitted, $\mathbf{s}_k$ is the weighting factors for signal $x_k$ and $\mathbf{n}$ is a noise vector.

Here, the set of weighting factors, $\mathbf{s}_1, \mathbf{s}_2, ..., \mathbf{s}_k$ represents a set of linear constraints imposed on the transmitted signals. Other constraints could possibly have been imposed on the signals $x_1, x_2, ..., x_k$ such as error control encoding, channel fading, etc. These other constraints are independent from the linear constraints imposed by the linear channel.

The optimal receiver structure finds the estimates of the transmitted signals, subject to all the imposed constraints. This approach is prohibitively complex for most practical cases of interest. As an alternative, a generic iterative receiver structure comprises of two separate components (see Figure 1). The first component finds the optimal estimates, only subject to the linear channel constraints, ignoring all other constraints. These estimates are inputs to the second component which finds the optimal estimates subject only to all the other constraints, ignoring the linear channel constraints. These estimates are in turn, provided as inputs to the first component in the following iteration cycle.

The optimal design of the first component, enforcing the linear channel constraints is often also prohibitively complex. To limit complexity, the component design itself can be constrained to be linear, leading to a linear filter. The design of this linear filter, given selected inputs to the filter, is disclosed herein. The function of the filter is to separate a selected signal from other "interfering" signals, based on the received signal which is a weighted sum of all transmitted signal as described in (1). An innovation in the filter design disclosed herein is to exploit the fact that information provided by the decoders is initially only marginally correlated over iterations, i.e., in the first few iterations, each iteration provides new information. The disclosed filter design is based on a technique to use all available information from all previous iterations.

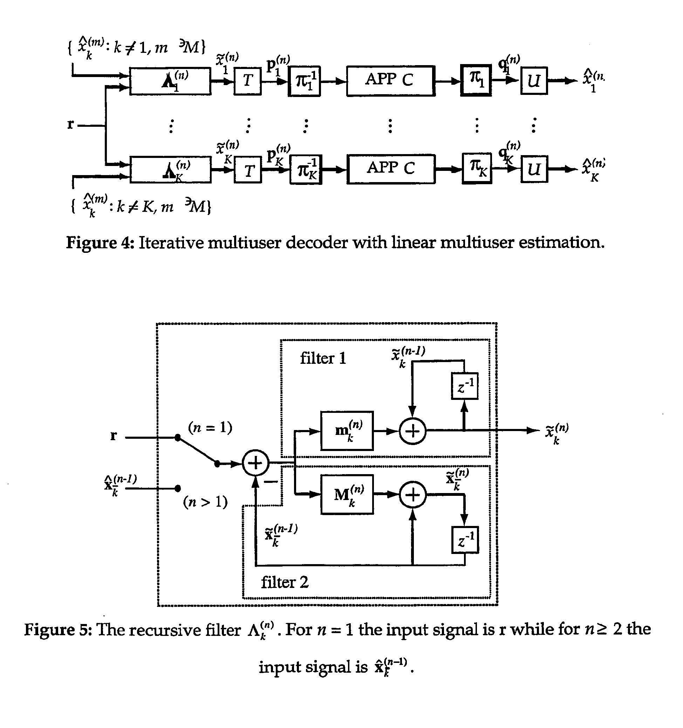

This implies that the filter grows linearly in size by a factor equal to the number of users. This is clearly impractical. Thus, the disclosed filter design makes it possible to use all the available information through recursive feedback of the filter output over iterations, without requiring a growing filter. The size of the filter remains the same. The filter design is based on two linear iterative filters, where the first linear filter provides an estimate of the desired signal based on the received signal, the most current estimates of all user signals from signal processing component 2, and the output of the second linear filter which is a vector of estimates of all user signals based on all previous inputs to signal processing component 1. The two linear filters are shown explicitly in Figure 5.

The linear iterative filters can appropriately be designed based on the linear minimum mean squared error criterion, according to the recursive expressions derived herein.

This invention applies to any system described by such a generic linear channel model, and where an iterative receiver as described above, is to be applied. Examples of such applications include (but is not limited to) the following:

- Decoding of coded transmission in a linear multiple access system.
- Decoding of coded transmission over an inter-symbol interference channel.
- Joint channel estimation and detection/ decoding of coded transmission over unknown channels.
- Decoding of space-time coded transmission.
- Decoding of coded transmission with higher order modulation formats.

In the following, the design is demonstrated for multiuser decoding for a general linear multiple access system.

System Model in Multiuser Decoding Example

The basic principle behind turbo decoding is to decode independently with respect to the various constraints imposed on the received signal. The overall constraint is accommodated by iteratively passing extrinsic information between the individual decoders. For turbo codes, these constraints are the parallel concatenated codes. For turbo-equalization they are the channel code and the memory of the inter-symbol interference channel. For multiuser decoding, there are constraints due to the multiple-access channel and due to the individual users' encoders.

In this embodiment, a theoretical framework for the derivation of linear multiuser estimators (MUEs) suitable for use as part of an iterative multiuser decoder is disclosed. We consider a two-input linear minimum mean squared error (LMMSE) estimator which inspires our main result, the derivation of a recursive Bayesian estimator. The proposed estimator yields estimates based on the received signal and all the successive outputs provided by the error control code decoders over all previous iterations. This approach is motivated by an observation that these estimates are loosely correlated during initial iterations.

Notation: P'' is the space of probability $n$-vectors (length $n$ non-negative vectors that sum to 1). For random vectors $\mathbf{x}$ and $\mathbf{y}$, E[$\mathbf{x}$] is the expectation, var $\mathbf{x}$ = E[$\mathbf{x}^*\mathbf{x}$] and cov $\mathbf{x}$ = <$\mathbf{x}$, $\mathbf{x}$> =E[$\mathbf{xx}^*$]. Likewise cov($\mathbf{x,y}$)= <$\mathbf{x,y}$> =E[$\mathbf{xy}^*$].

We consider the $K$-user linear multiple-access system of Figure 2. User $k, k$ = 1, 2, ..., $K$ encodes its binary information sequence $b_k[l]$ using a rate $R$ code $C$, to produce the coded binary sequence $d_k[l]$.

Consider transmission of 2$L$ code bits per user. Each user independently permutes their encoded sequence with an interleaver $\pi_k$. Denote the sequence output from the interleaver of user $k$ as $u_k[l], l$= 1, 2,...2$L$. Pairs of interleaved code bits $u_k[l]$ are memorylessly mapped onto the quaternary phase-shift keyed (QPSK) signal constellation,

$$Q = \{\pm 1/\sqrt{2} \pm j/\sqrt{2}\},$$ giving sequences of modulated code symbols $x_k[i]$, where $i$ =1, 2,...,$L$ is the symbol time index. We choose QPSK only for simplicity.

At symbol time $i$, each user transmits $s_k[i] x_k[i]$, the multiplication of $x_k[i]$ with the real $N$-chip spreading sequence, $s_k[i] \in \{-1,1\}^N$. We model the use of spreading sequences with period much longer than the data symbol duration by letting each element of $\mathbf{s}_k[i]$ be independent and identical distributed over users and time. For conceptual ease only, users are symbol synchronized, transmit over an additive white Gaussian noise (AWGN) channel, and are received at the same power level.

These assumptions however are not required. Write the chip-match filtered received vector $\mathbf{r}[i] \in £^N$ at symbol time $i$=1, 2,..., $L$ as

$$\mathbf{r}[i] = \mathbf{S}[i]\mathbf{x}[i] + \mathbf{n}[i] \tag{2}$$

where $\mathbf{S}[i]$= $(s_1[i], s_2[i],...,s_k[i])$ is a $N{\times}K$ matrix with the spreading sequence for user $k$ as column $k$. The vector $x[i] \in Q^K$ has elements $x_k[i]$ and the vector $\mathbf{n}[i] \in £^N$ is a sampled circularly symmetric i.i.d. Gaussian noise process, with cov$\mathbf{n}[i] = \sigma^2$I.

Henceforth, it is not required to identify specific symbol intervals and these indices will be omitted. For later use, we define $\mathbf{S}_{\bar{k}} = (\mathbf{s}_1, \mathbf{s}_2,...,\mathbf{s}_{k-1}, \mathbf{s}_{k+1},...,\mathbf{s}_k)$ and $\mathbf{x}_{\bar{k}} = (x_1, x_2,...,x_{k-1}, x_{k+1},...,x_k)^t$ to indicate deletion of user $k$ from $\mathbf{S}$ or $\mathbf{x}$ .

Recursive Filters For Multiuser Estimation

Application of the turbo-principle to the coded linear multiple-access system, where for each user, we treat the error control code as one constraint and the multiuser channel (2) as the other constraint, results in the canonical receiver structure of Figure 3 [1].

At iteration $n$, the multiuser APP takes as input $\mathbf{r}$ and the set of extrinsic probabilities $\mathbf{q}_k^{(n-1)}$ from user $k$ = 1, 2,...,$K$ calculated in the previous iteration $n$-1. $\mathbf{q}_k^{(n-1)}[i] \in P^{|Q|}$ is the extrinsic probability distribution on the transmitted symbols $x_k[i] \in Q$ of user $k$. The multiuser APP calculates the updated extrinsic probability vector $\mathbf{p}_k^{(n)}[i]$ for user $k$. After appropriate de-interleaving, the extrinsics $\mathbf{p}_k^{(n)}$ are used as priors for independent APP decoding of the code $C$ by each user, producing (after interleaving) the extrinsics $\mathbf{q}_k^{(n)}$, which serve as priors for the subsequent iteration. The marginalization in the multiuser APP requires summation over $|Q|^{K-1}$ terms. Many lower-complexity alternatives have been proposed while retaining the same basic architecture.

Consider the receiver structure shown in Figure 4. There is a bank of linear filters $\Lambda_k^{(n)}$, one for each user.

The coefficients of these filters may be re-computed every iteration. For the first iteration, $n = 1$, the input $\Lambda_k^{(1)}$ is just **r**. For subsequent iterations $n = 2,3,...$, the input to the filter for user $k$ is r and a set of signal estimates for all the other users from previous iterations, $\{\hat{x}_{k'}^{(m)} : k' \neq k, m \in \mathrm{M}\}$, where M $\subseteq \{1, 2, ..., n\text{-}1\}$ is a set defining the memory order of the iteration. Typically in the literature, M = $\{n\text{-}1\}$, although recently M = $\{n\text{-}1, n\text{-}2\}$ has been considered [2].

The output of the filter $\Lambda_k^{(n)}$ is an updated sequence of estimates $\hat{x}_k^{(n)}$ of the corresponding code symbol for user $k$. These estimates are mapped from the signal space onto the probability vector space using a symbol-wise mapping $T : \pounds$ a $\mathrm{P}^{|Q|}$, The resulting sequence of probability vectors $\mathbf{p}_k^{(n)}$ are used as priors for individual APP decoding of the code C. These APP decoders can output either posterior or extrinsic probabilities $\mathbf{q}_k^{(n)}$ (both approaches have been investigated in the literature). The sequence of probability vectors $\mathbf{q}_k^{(n)}$ is in turn mapped back onto the signal space by a symbol-wise function $U : \mathrm{P}^{|Q|}$ a $\pounds$. Typically, $T$ calculates the vectors $\mathbf{p}_k^{(n)}$ assuming that $\hat{x}_k^{(n)}$ is Gaussian distributed with known mean and variance, $\tilde{x}_k^{(n)} \sim N\left(\tilde{\mu}_k^{(n)}, \tilde{\zeta}_k^{(n)}\right)$. Likewise, a common choice for $U$ is the conditional mean.

The following easily proved lemma provides a useful general framework for the derivation of filters $\Lambda_k^{(n)}$.

**Lemma 1**

*Suppose that for a parameter x we have the vector observation* $\mathbf{c}$ = $(\mathbf{a}^t \mathbf{b}^t)^t$, *the concatenation of two vector observations* **a** *and* **b**. *The LMMSE estimate of x given* **c** *is*

$$\tilde{x} = \langle x, \mathbf{a} \rangle \langle \mathbf{a}, \mathbf{a} \rangle^{-1} \mathbf{a} + \mathbf{m}\left(\mathbf{b} - \langle \mathbf{b}, \mathbf{a} \rangle \langle \mathbf{a}, \mathbf{a} \rangle^{-1} \mathbf{a}\right) \qquad (3)$$

*where* **m** = ($< x$,**b**$>$-$<x$,**a**$><$**a**,**a**$>^{-1}<$**a**,**b**$>$)($<$**b**,**b**$>$-$<$**b**,**a**$><$**a**,**a**$>^{-1}<$**a**,**b**$>$)$^{-1}$
We see that (3) can written as x%= **ga + m(Fa - b),** where

$$\mathbf{m} = (< x, \mathbf{b} > - < x, \mathbf{a} >< \mathbf{a}, \mathbf{a} >^{-1} < \mathbf{a}, \mathbf{b} >)(< \mathbf{b}, \mathbf{b} > - < \mathbf{b}, \mathbf{a} >< \mathbf{a}, \mathbf{a} >^{-1} < \mathbf{a}, \mathbf{b} >)^{-1} \quad (4)$$

$$\mathbf{F} = < \mathbf{b}, \mathbf{a} >< \mathbf{a}, \mathbf{a} >^{-1} \qquad (5)$$

$$\mathbf{g} = < x, \mathbf{a} >< \mathbf{a}, \mathbf{a} >^{-1} \qquad (6)$$

So far in the literature, linear filters $\Lambda_k^{(n)}$ for multiuser estimation in iterative decoding have been designed based on the received signal **r** and the most current code symbol estimates of the interfering users $\hat{x}_k^{(n)}$. After $n$ iterations, we have however a sequence of such estimates available, namely $\{\hat{x}_k^{(1)}, \hat{x}_k^{(2)}, ..., \hat{x}_k^{(n)}\}$ together with **r**. It has been observed that the estimates are not strongly correlated during the initial iterations [2].

Consider the following recursively defined vector of observables as input to the filter $\Lambda_k^{(n)}$,

$$\mathbf{c}_k^{(n)} = \begin{cases} \mathbf{r} & n = 1 \\ \begin{pmatrix} \mathbf{c}_k^{(n-1)} \\ \hat{\mathbf{x}}_k^{(n-1)} \end{pmatrix} & n = 2,3,\ldots \end{cases} \tag{7}$$

Direct application of the LMMSE criterion results in $\Lambda_k^{(n)} = \; <x_k, \mathbf{c}_k^{(n)}> <\mathbf{c}_k^{(n)}, \mathbf{c}_k^{(n)}>^{-1}$.

It is clear however that $\Lambda_k^{(n)}$ grows in dimension with $n$ which is impractical.

Inspired by recursive Bayesian estimation [3], we can prove the following theorem that solves this dimensionality problem by giving a recursive form for $\Lambda_k^{(n)}$ (subject to certain constraints on the input signal).

**Theorem 1**

Make the following assumptions,

**A1:** *The received signal* $\mathbf{r} = \mathbf{Sx} + \mathbf{n}$, *is described according to* (2) *where* **n** *is circularly symmetric complex Gaussian with* cov $\mathbf{n} = \sigma^2 \mathbf{I}$ , *and* $\sigma^2$ *and* **s** *are known.*

**A2:** *The interleaved code symbol estimates of the interfering users* $\hat{\mathbf{x}}_k^{(n)}$ *coming out of the single user APP decoders can be written as* $\hat{x}_k^{(n)} = x_k^{(n)} + \hat{v}_k^{(n)}$ *where* $\hat{v}_k^{(n)}$ *is uncorrelated with* **x** *and also uncorrelated over time and iterations, but not over users at a given iteration, i.e.* $<\mathbf{x}, \hat{v}_k^{(n)}> \; = 0, \; <\hat{v}_k^{(n)}, \hat{v}_k^{(n)}> \; = 0$ *for* $n \neq m$ *and* $<\hat{v}_k^{(n)}, \hat{v}_j^{(n)}> \; = q_{kj}$.

*Define* $\mathbf{Q}_k^{(n)} = \; <\hat{v}_k^{(n)}, \hat{v}_{\bar{k}}^{(n)}>$, *with elements determined as shown above.*

*Let* $\mathbf{c}_k^{(n)}$ *be according to* (7)*. Under* **A1** *and* **A2,** *the LMMSE estimate of* $x_k$ *given* $\mathbf{c}_k^{(n)}$ *is given by the output* $\tilde{x}_k^{(n)}$ *of the recursive filter shown in Figure 5. The filters in the figure are defined as follows.*

$$\mathbf{m}_k^{(n)} = -\mathbf{w}_k^{(n)}\left(\mathbf{I} + \mathbf{Q}_k^{(n-1)} - \mathbf{W}_k^{(n)}\right)^{-1}$$

$$\mathbf{M}_k^{(n)} = \left(\mathbf{I} - \mathbf{W}_k^{(n)}\right)\left(\mathbf{I} + \mathbf{Q}_k^{(n-1)} - \mathbf{W}_k^{(n)}\right)^{-1}$$

*with the recursive update equations for n=3,4,...*

$$\mathbf{w}_k^{(n)} = \mathbf{w}_k^{(n-1)}\left[\mathbf{I} - \left(\mathbf{H}_k^{(n-1)}\right)^{-1}\left(\mathbf{I} - \mathbf{W}_k^{(n-1)}\right)\right]^{-1}$$

$$\mathbf{W}_k^{(n)} = \mathbf{W}_k^{(n-1)} + \left(\mathbf{I} - \mathbf{W}_k^{(n-1)}\right)\left(\mathbf{H}_k^{(n-1)}\right)^{-1}\left(\mathbf{I} - \mathbf{W}_k^{(n-1)}\right)$$

$$\mathbf{H}_k^{(n-1)} = \mathbf{I} + \mathbf{Q}_k^{(n-2)} - \mathbf{W}_k^{(n-1)}$$

The initial conditions with $\tilde{x}_k^{(0)} = 0$ and $\tilde{x}_{\bar{k}}^{(0)} = 0$ are $\mathbf{m}_k^{(1)} = \mathbf{s}_k^t(\mathbf{SS}^t + \sigma^2\mathbf{I})^{-1}$, $\mathbf{M}_k^{(1)} = \mathbf{S}_{\bar{k}}^t(\mathbf{SS}^t + \sigma^2\mathbf{I})^{-1}$ for $n$=1 and $\mathbf{w}_k^{(2)} = \mathbf{s}_k^t(\mathbf{SS}^t + \mathbf{I})^{-1}\mathbf{S}_{\bar{k}}$, $\mathbf{W}_k^{(2)} = \mathbf{S}_{\bar{k}}^t(\mathbf{SS}^t + \sigma^2\mathbf{I})^{-1}\mathbf{S}_{\bar{k}}$ for $n$=2.

Computer simulations have been used to evaluate the proposed technique. For the purposes of simulation, each user used the maximum free distance 4 state convolutional code naturally mapped onto QPSK. Each user is therefore transmitting 1 bit per channel use. Binary spreading sequences with N=8 were generated i.i.d. at each symbol for each user. Transmission is chip synchronous and all users are received at the same power level.

Indicative simulation results are shown in FIG. 9. Three curves are shown. PIC is the parallel interference cancellation method of [4]. IPIC is the improved parallel interference cancellation of [2]. RBE is the proposed recursive Bayesian estimation technique. Each of the curves begins for small numbers of users at the single-user BER near 10<-4>. As each receiver fails to converge, its curve deviates from single-user. For PIC, this occurs at K/N=1.125. For IPIC, the limit is 1.625 and for RBE 1.875. The performance benefit of IPIC over PIC is reported in [2]. The recursive Bayesian technique supports even higher loads. In fact, further numerical investigations (for smaller systems) have shown that RBE supports almost the same load as using the multiuser APP.

Described herein is a computationally efficient recursive filter for use in iterative multiuser decoding. This filter uses the entire history of outputs from the single user decoders in order to accelerate convergence and to support greater loads.

It will be appreciated by those skilled in the art, that the invention is not restricted in its use to this particular application described, neither is the present invention restricted to its preferred embodiment with regards to the particular elements and/or features described or depicted herein. It will be appreciated that various modifications can be made and the invention should be understood to include all such modifications that fall within the scope of the following claims.

References

[1] M. C. Reed, C. B. Schlegel, P. D. Alexander, and J. Asenstorfer, "Iterative multiuser detection for CDMA with FEC: Near-single-user performance," IEEE Trans. Commun., pp. 1693-1699, Dec. 1998.
[2] S. Marinkovic, B. S. Vucetic, and J. Evans, "Improved iterative Parallel interference cancellation for coded CDMA systems," in the Proc. IEEE Int. Symp. Info. Theory, (Washington D.C.), p. 34, July 2001.
[3] D. E. Catlin, Estimation, Control, and the Discrete Kalman Filter, Springer Verlag, 1989.
[4] P. D. Alexander, A. J. Grant, and M. C. Reed, "Iterative detection on code-division multiple-access with error control coding," European Transactions on Telecommunications, vol. 9, pp. 419-426, Sept.-Oct.1998.

**Claims**

1. An iterative signal processing arrangement comprising:

   a receiver configured to receive one or more received signals dependent on a plurality of transmitted signals;
   a plurality of pairs of first and second signal processing components, the pairs of components being in iterative configuration, each of the first signal processing components having as input one or more of said received signals, wherein for each said signal processing component pair the output of said first signal processing component is an estimate of a transmitted signal, said estimate being of a different transmitted signal for each pair, wherein said estimate is input to said corresponding second signal processing component that provides a further estimate of the transmitted signal estimated by the first signal processing component to the output of said second signal processing component; and

   **characterised in that:**

   for each pair, the first signal processing component comprises at least two recursive linear filters, wherein:

a first of said recursive linear filters outputs a recursively updated estimate of the transmitted signal corresponding to said pair to said second signal processing component, and

a second of said recursive linear filters provides an estimate of one or more of the other transmitted signals, and then delays by one iteration cycle said estimate and outputs said delayed estimate,

wherein the sum of the input to the first signal processing component and the output of the second recursive linear filter is output to the input of both the first and second recursive linear filters; and

wherein the input to each of said first signal processing components of each of said pairs comprises:

for a first iteration, one or more of said received signals; and

for a second and subsequent iterations, the output, from the previous iteration, of the second signal processing component of all other of said pairs.

2. An iterative signal processing arrangement according to claim 1,
wherein said first linear iterative filter provides a minimum least squared estimate of said selected transmitted signal.

3. An iterative signal processing arrangement according to claim 1,
wherein said second linear iterative filter provides a minimum least squared estimate of said selected transmitted signal.

4. An iterative signal processing arrangement according to claim 1,
wherein the estimates provided by said first and second linear iterative filters are minimum least squared estimates.

5. An iterative signal processing arrangement according to claim 4,
wherein each of said first and second linear iterative filters have a switch, the input of which is the same as the input to the first signal processing component in which the filters are comprised, wherein the output of said switch is input to a first summing device, and said first linear iterative filter receives as input the output of said first summing device which is input to a filter having taps that are recursively updated based on receiving one or more said received signals, the output of said first linear iterative filter is input to a second summing device the output of which becomes the output of said first signal processing component as well as being input to a first single iteration delay device the output of which is input to said second summing device, while said second linear iterative filter receives as input the output of said first summing device which is input to a second linear iterative filter having taps which are recursively updated based on receiving one or more said received signals the output of said second linear iterative filter is input to a third summing device the output of which is input to a second single iteration delay device, the output of which is split into a first output and a second output, the first output being input to said third summing device, the second output being negated- and input to said first summing device.

6. An iterative filter arrangement according to any preceding claim,
wherein the output of said first signal processing component is de-interleaved and the output of said second signal processing component is interleaved.

7. An iterative signal processing arrangement according to claim 1,
wherein the selected transmitted signal is represented by a discrete time series representation of said selected transmitted signal and where the output of said first signal processing component is a minimum least squared estimate of said selected transmitted signal.

8. An iterative signal processing arrangement as claimed in any one of the preceding claims, wherein each transmitted signal corresponds to a different user.

**Patentansprüche**

1. Iterative Signalverarbeitungsanordnung, umfassend:

einen Empfänger, der konfiguriert ist, um ein oder mehrere empfangene Signale zu empfangen, abhängig von einer Vielzahl von übertragenen Signalen;
eine Vielzahl von Paaren von ersten und zweiten Signalverarbeitungskomponenten, wobei die Komponenten-Paare sich in iterativer Konfiguration befinden, jedes der ersten Signalverarbeitungskomponenten eines oder mehrere der empfangenen Signale als Eingang hat, wobei für jedes der Signalverarbeitungskomponenten-Paare der Ausgang der ersten Signalverarbeitungskomponente eine Schätzung eines übertragenen Signals ist, die Schätzung von einem verschiedenen übertragenen Signal für jedes Paar ist, wobei die Schätzung in die korrespondierende zweite Signalverarbeitungskomponente eingegeben wird, die eine weitere Schätzung des übertragenen Signals, das von der ersten Signalverarbeitungskomponente geschätzt wurde, an den Ausgang der zweiten Signalverarbeitungskomponente bereitstellt; und **dadurch gekennzeichnet, dass:**

für jedes Paar die erste Signalverarbeitungskomponente mindestens zwei rekursive lineare Filter umfasst, wobei:

ein erster der rekursiven linearen Filter eine rekursiv aktualisierte Schätzung des übertragenen Signals, das mit dem Paar korrespondiert, an die zweite Signalverarbeitungskomponente ausgibt, und ein zweiter der rekursiven linearen Filter eine Schätzung von einem oder mehreren der anderen übertragenen Signale bereitstellt und dann die Schätzung um einen Iterationszyklus verzögert und die verzögerte Schätzung ausgibt,

wobei die Summe des Eingangs in die erste Signalverarbeitungskomponente und des Ausgangs des zweiten rekursiven linearen Filters in den Eingang von sowohl des ersten als auch des zweiten rekursiven linearen Filters ausgegeben wird; und

wobei der Eingang von jeder der ersten Signalverarbeitungskomponenten von jedem der Paare umfasst:

für eine erste Iteration eines oder mehrere der empfangenen Signale; und für eine zweite und nachfolgende Iteration den Ausgang, von der vorherigen Iteration, der zweiten Signalverarbeitungskomponente von allen anderen der Paare.

2. Iterative Signalverarbeitungsanordnung nach Anspruch 1, wobei der erste lineare iterative Filter eine minimale Schätzung nach der Methode der kleinsten Quadrate des ausgewählten übertragenen Signals bereitstellt.

3. Iterative Signalverarbeitungsanordnung nach Anspruch 1, wobei der zweite lineare iterative Filter eine minimale Schätzung nach der Methode der kleinsten Quadrate des ausgewählten übertragenen Signals bereitstellt.

4. Iterative Signalverarbeitungsanordnung nach Anspruch 1, wobei die Schätzungen, die von den ersten und zweiten linearen iterativen Filtern bereitgestellt werden, minimale Schätzungen nach der Methode der kleinsten Quadrate sind.

5. Iterative Signalverarbeitungsanordnung nach Anspruch 4, wobei jeder der ersten und zweiten linearen iterativen Filter einen Schalter aufweist, dessen Eingang derselbe ist wie der Eingang zu der ersten Signalverarbeitungskomponente, in der die Filter enthalten sind, wobei der Ausgang des Schalters in eine erste Summierungsvorrichtung eingegeben wird, und der erste lineare iterative Filter den Ausgang der ersten Summierungsvorrichtung als Eingang empfängt, der in einen Filter eingegeben wird, der Anzapfungen aufweist, die rekursiv basierend auf den Empfang eines oder mehrerer der empfangenen Signale aktualisiert werden, der Ausgang des ersten linearen iterativen Filters in eine zweite Summierungsvorrichtung eingegeben wird, deren Ausgang sowohl der Ausgang der ersten Signalverarbeitungskomponente wird als auch in eine erste einzelne Iterationsverzögerungsvorrichtung eingegeben wird, deren Ausgang in die zweite Summierungsvorrichtung eingegeben wird, während der zweite lineare iterative Filter den Ausgang der ersten Summierungsvorrichtung als Eingang empfängt, der in einen zweiten linearen iterativen Filter eingegeben wird, der Anzapfungen aufweist, die rekursiv basierend auf den Empfang eines oder mehrerer der empfangenen Signale aktualisiert werden, der Ausgang des zweiten linearen iterativen Filters in eine dritte Summierungsvorrichtung eingegeben wird, deren Ausgang in eine zweite einzelne Iterationsverzögerungsvorrichtung eingegeben wird, deren Ausgang in einen ersten Ausgang und einen zweiten Ausgang aufgeteilt wird, wobei der erste Ausgang in die dritte Summierungsvorrichtung eingegeben wird, der zweite Ausgang negiert und in die erste Summierungsvorrichtung eingegeben wird.

6. Iterative Filteranordnung nach einem der vorstehenden Ansprüche, wobei der Ausgang der ersten Signalverarbeitungskomponente entschachtelt wird und der Ausgang der zweiten Signalverarbeitungskomponente verschachtelt wird.

7. Iterative Signalverarbeitungsanordnung nach Anspruch 1, wobei das ausgewählte übertragene Signal durch eine diskrete Zeitreihendarstellung des ausgewählten übertragenen Signals repräsentiert wird und wobei der Ausgang der ersten Signalverarbeitungskomponente eine minimale Schätzung nach der Methode der kleinsten Quadrate des ausgewählten übertragenen Signals ist.

**8.** Iterative Signalverarbeitungsanordnung nach einem der vorstehenden Ansprüche, wobei jedes übertragene Signal mit einem verschiedenen Benutzer korrespondiert.

## Revendications

**1.** Agencement de traitement itératif de signaux comprenant :

un récepteur qui est configuré pour recevoir un ou plusieurs signaux reçus en fonction d'une pluralité de signaux transmis ;
une pluralité de paires de première et de deuxième composantes de traitement de signaux, les paires de composantes étant en configuration itérative, chacune des premières composantes de traitement de signaux ayant en tant qu'entrée un ou plusieurs desdits signaux reçus, cas dans lequel pour chacune desdites paires de composantes de traitement de signaux la sortie de ladite première composante de traitement de signaux étant un estimatif d'un signal transmis, ledit estimatif portant sur un signal transmis différent pour chaque paire, cas dans lequel ledit estimatif est introduit dans ladite deuxième composante de traitement correspondante de signaux laquelle fournit un estimatif supplémentaire du signal transmis ayant été estimé par la première composante de traitement de signaux sur la sortie de ladite deuxième composante de traitement de signaux ; **et caractérisé en ce que** :

pour chaque paire, la première composante de traitement de signaux comporte au moins deux filtres linéaires récursifs, cas dans lequel :

un premier filtre desdits filtres linéaires récursifs produit un estimatif mis à jour de façon récursive du signal transmis correspondant à ladite paire au niveau de ladite deuxième composante de traitement de signaux, et
un deuxième filtre desdits filtres linéaires récursifs fournit un estimatif de l'un ou de plusieurs des autres signaux transmis, et puis temporise d'un cycle d'itération ledit estimatif et produit ledit estimatif temporisé,
cas dans lequel la somme de l'entrée sur la première composante de traitement de signaux et la sortie du deuxième filtre linéaire récursif est présentée à l'entrée tant du premier filtre linéaire récursif que du deuxième filtre linéaire récursif ; et
cas dans lequel l'entrée présentée sur chacune desdites premières composantes de traitement de signaux de chacune desdites paires, comprend :

pour une première itération, un ou plusieurs desdits signaux reçus ; et
pour une deuxième itération et pour des itérations ultérieures, la sortie, provenant de l'itération précédente, de la deuxième composante de traitement de signaux de toutes les autres desdites paires.

**2.** Agencement de traitement itératif de signaux selon la revendication 1, ledit premier filtre itératif linéaire fournissant un estimatif minimal du moindre carré dudit signal transmis sélectionné.

**3.** Agencement de traitement itératif de signaux selon la revendication 1, ledit deuxième filtre itératif linéaire fournissant un estimatif minimal du moindre carré dudit signal transmis sélectionné.

**4.** Agencement de traitement itératif de signaux selon la revendication 1, les estimatifs fournis par lesdits premier et deuxième filtres itératifs linéaires étant des estimatifs minimaux du moindre carré.

**5.** Agencement de traitement itératif de signaux selon la revendication 4, chacun desdits premier et deuxième filtres itératifs linéaires possédant un commutateur dont l'entrée est la même que l'entrée présentée à la première composante de traitement de signaux dans laquelle les filtres sont englobés, cas dans lequel la sortie dudit commutateur est introduite dans un premier dispositif de sommation, et ledit premier filtre itératif linéaire reçoit sous forme d'entrée la sortie dudit premier dispositif de sommation laquelle est présentée à un filtre ayant des prises qui sont mises à jour de façon récursive sur la base de la réception d'un ou de plusieurs desdits signaux reçus, la sortie dudit premier filtre itératif linéaire est introduite dans un deuxième dispositif de sommation dont la sortie devient la sortie de ladite première composante de traitement de signaux tout en étant introduite dans un premier dispositif de temporisation d'itération unique dont la sortie est présentée audit deuxième dispositif de sommation, pendant que ledit deuxième filtre itératif linéaire reçoit sous forme d'entrée la sortie dudit premier dispositif de sommation laquelle est présentée à un deuxième filtre itératif linéaire ayant des prises qui sont mises à jour de façon récursive sur la base de la réception d'un ou de plusieurs desdits signaux reçus, la sortie dudit deuxième filtre itératif linéaire est introduite dans un troisième dispositif de sommation dont la sortie est présentée à un deuxième dispositif de temporisation d'itération unique, dont la sortie est divisée en une première sortie et en une deuxième sortie, la première sortie étant introduite dans ledit troisième dispositif de sommation, la deuxième sortie étant inversée et présentée audit premier dispositif de sommation.

6. Agencement à filtre itératif selon l'une quelconque des revendications précédentes, la sortie de ladite première composante de traitement de signaux étant désentrelacée et la sortie de ladite deuxième composante de traitement de signaux étant entrelacée.

7. Agencement de traitement itératif de signaux selon la revendication 1, le signal transmis sélectionné étant représenté par une représentation série temporelle discrète dudit signal transmis sélectionné et où la sortie de ladite première composante de traitement de signaux est un estimatif minimal du moindre carré dudit signal transmis sélectionné.

8. Agencement de traitement itératif de signaux selon l'une quelconque des revendications précédentes, chaque signal transmis correspondant à un utilisateur différent.

**Figure 1:** Generic iterative receiver structure

**Figure 2:** The transmission system model for coded CDMA

**Figure 3:** Canonical iterative multiuser decoder.

$\{ \hat{x}_k^{(m)} : k \neq 1, m \ni M \}$

**Figure 4:** Iterative multiuser decoder with linear multiuser estimation.

**Figure 5:** The recursive filter $\Lambda_k^{(n)}$. For $n = 1$ the input signal is $\mathbf{r}$ while for $n \geq 2$ the input signal is $\hat{x}_k^{(n-1)}$.

**Figure 6:** BER versus users after 10 iterations, $N = 8$, $E_b / N_0 = 5$ dB.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Po-An Sung et al.** *IEEE journal of selected areas in communications,* October 1996, vol. 14 (8
- **Zigang Yang et al.** *IEEE journal of selected areas in communications,* August 2001, vol. 19 (8
- **M. C. Reed ; C. B. Schlegel ; P. D. Alexander ; J. Asenstorfer.** Iterative multiuser detection for CDMA with FEC: Near-single-user performance. *IEEE Trans. Commun.,* December 1998, 1693-1699
- **S. Marinkovic ; B. S. Vucetic ; J. Evans.** Improved iterative Parallel interference cancellation for coded CDMA systems. *the Proc. IEEE Int. Symp. Info. Theory,* July 2001, 34
- **D. E. Catlin.** Estimation, Control, and the Discrete Kalman Filter. Springer Verlag, 1989
- **P. D. Alexander ; A. J. Grant ; M. C. Reed.** Iterative detection on code-division multiple-access with error control coding. *European Transactions on Telecommunications,* September 1998, vol. 9, 419-426